# DEMANDE DE BREVET EUROPEEN

(11) **EP 1 281 317 A1**
(43) Date de publication de la demande: **05.02.2003**
(21) Numéro de dépôt: 02291840.3
(22) Date de dépôt: 19.07.2002
(51) Int. Cl.: A01K 87/00

(54) **Canne à peche à profil ameliore**

(30) Priorité: 31.07.2001 FR 0110253
(71) Demandeur: YMBC, 95540 Mery-sur-Oise (FR); Masson, Yannick, 95540 Mery-sur-Oise (FR)
(72) Inventeur: M. Masson, Yannick, 95540 Mery-sur-Oise (FR)
(74) Mandataire: Lerner, François

(57) **Abrégé**

L'invention se rapporte à une canne à pêche à profil amélioré.

Selon l'invention, la canne à pêche est constituée de plusieurs brins qui s'ajustent en s'emmanchant les uns au bout des autres et qui sont formés d'un profil creux, qui présente une section sensiblement hexagonale recti/curviligne composée de deux parties (fab ; cde) de segment anguleux à section rectiligne en V ouvert se faisant face réunies par deux parties (A ; A') de segment curviligne.

A poids égal, la canne présente des caractéristiques d'utilisation très améliorées.

## Description

La présente invention a pour objet des perfectionnements à une canne à pêche, et plus particulièrement à la constitution des brins qu'elle comporte.

On connaît des cannes à pêche depuis des temps reculés qui sont constituées par des bambous.

Plus récemment, on a fabriqué des cannes à pêche, constituées de plusieurs brins qui s'emmanchent les uns au bout des autres, chaque brin étant formé par un profil creux de section circulaire. Les cannes les plus modernes utilisent des brins fabriqués en fibre de carbone.

L'invention a pour objet de perfectionner la technique de fabrication de ces cannes à pêche fabriquées en fibre de carbone en permettant, à poids égal, une rigidité, une puissance et une précision supérieures à celles qui pouvaient être obtenues par les meilleures cannes présentes sur le marché.

Cet objet est atteint conformément à l'invention du fait que le profil de la canne présente une section sensiblement hexagonale recti/curviligne composée de deux parties de segment anguleux à section rectiligne en V ouvert se faisant face réunies par deux parties de segment curviligne.

Selon une autre caractéristique de l'invention, lesdites parties de segment curviligne sont sensiblement circulaires et ont un rayon de courbure supérieur au rayon du cercle inscrit dans ledit profil.

Avantageusement, lesdits segments anguleux sont disposés symétriquement par rapport au plan médian de la canne passant par les milieux des secteurs curvilignes.

L'invention et sa mise en oeuvre apparaîtront plus clairement à l'aide de la description qui va suivre, faite en référence aux dessins annexés, dans lesquels :
la figure 1 montre de façon générale une canne à pêche constituée de quatre brins ;
la figure 2 montre à grande échelle une section préférée de réalisation des différents brins.

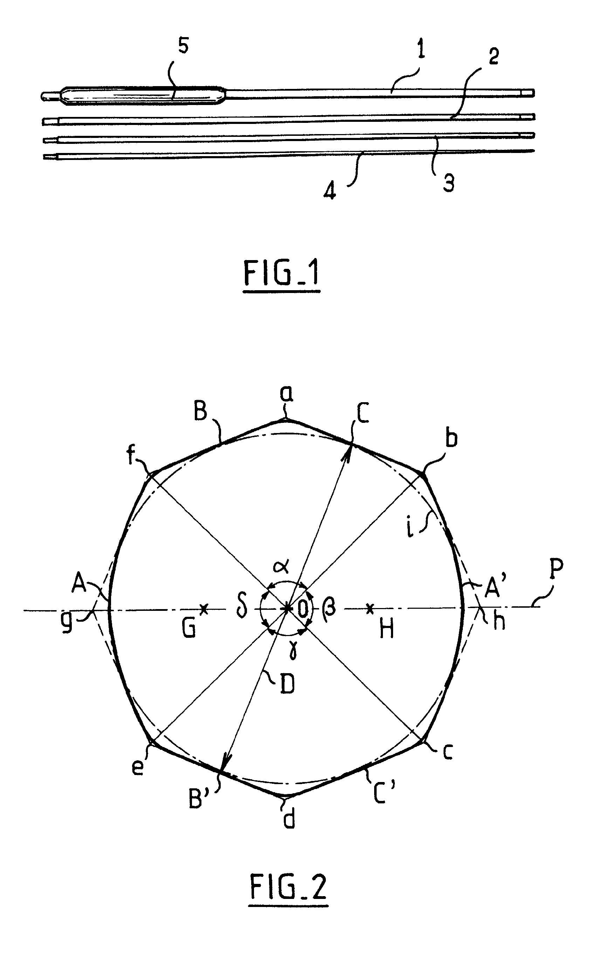

Dans l'exemple illustré à la figure 1, la canne à pêche comporte essentiellement quatre brins, référencés respectivement 1, 2, 3 et 4, dont la section va en décroissant depuis le brin référencé 1 sur lequel se trouve la poignée 5 de saisie de la canne, jusqu'au brin référencé 4 à l'extrémité libre la plus fine duquel se trouve le dernier anneau (non représenté) à travers lequel passe le fil à l'extrémité duquel sera fixé l'hameçon (non représenté). Pour ne pas surcharger les dessins, les anneaux de guidage du fil prévus sur chaque brin n'ont pas été représentés, non plus que, au niveau de la poignée, le moulinet d'enroulement du fil.

Conformément à l'invention, et comme illustré plus précisément à la figure 2, la section des brins n'est pas comme usuellement circulaire, mais en quelque sorte hexagonale, présentant six sommets respectivement référencés a, b, c, d, e, f. Et cet hexagone n'est pas régulier, mais est constitué de divers segments que l'on va passer ci-dessous en revue.

Le segment anguleux du profil de la canne "fab" est constitué de deux segments rectilignes respectivement B et C qui se réunissent au sommet a par un angle arrondi en formant un V très ouvert avec un angle obtus voisin par exemple de 120°. Le segment anguleux "fab" est suivi d'un segment curviligne "bc" référencé A'. On retrouve ensuite un segment anguleux "cde" constitué de deux segments rectilignes référencés B' et C', respectivement. On trouve ensuite le second segment curviligne "ef" référencé A.

En observant de façon plus précise la figure 2, et en se reportant aux cotes qui seront données ci-après dans un tableau récapitulatif, on peut relever les caractéristiques originales suivantes.

Tout d'abord, on observe que le profil de la canne est symétrique par rapport à un plan médian P passant par le milieu des segments curvilignes A et A'.

On observe également que le cercle inscrit i à l'intérieur du profil de la canne présente un diamètre D, et que le rayon de courbure R des secteurs curvilignes A et A', qui sont presque circulaires, est supérieur au rayon de courbure du cercle inscrit. Avantageusement le rayon de courbure moyen des secteurs curvilignes A et A' sera compris entre 1 et 2 fois le rayon de courbure du cercle inscrit, par exemple 1,3 ou 1,5 fois ce rayon, le centre de courbure du segment A se situant ainsi sensiblement selon l'exemple de réalisation illustré au point H, et le centre de courbure du segment A' se situant ainsi sensiblement au point G.

On observe également que les segments rectilignes B et C ne sont pas égaux, le segment B étant plus long que le segment C, par exemple d'un tiers. La même inégalité se retrouve au niveau des segments B' et C' qui sont l'image en symétrie par rapport au plan P des segments B et C.

Cependant ces segments peuvent également être de même longueur pour une réalisation simplifiée. Dans ce cas, la base est en quelque sorte un octogone régulier (a, b, h, c, d, e, g, f) dont quatre segments rectilignes ont été remplacés par deux segments curvilignes A, A'.

On observe encore, si l'on appelle α, β, γ et δ les angles au centre qui sous-tendent respectivement le segment anguleux "fac", le segment curviligne A', le segment anguleux "cde" et le segment curviligne A, que ces quatre angles sont avantageusement sensiblement égaux, voisins de 90° chacun. Une légère inégalité peut également être prévue, les angles au centre sous-tendant les secteurs curvilignes pouvant par exemple être légèrement supérieurs aux angles sous-tendant les segments anguleux.

De façon plus précise, on donnera ci-après, dans un tableau récapitulatif, à titre d'exemple de réalisation les cotes du profil des brins successifs en fonction de la distance 0, à la pointe de la canne, à l'autre extrémité du manche. Dans le tableau qui suit, on a ainsi référencé à la distance 0, à la pointe d'extrémité de la canne, puis à 10 cm de distance, et enfin de 50 cm en 50 cm les longueurs du rayon r du cercle inscrit i et du rayon R du segment curviligne des profils qui s'emmanchent les uns à la suite des autres, selon une réalisation préférée.

**Tableau récapitulatif**

| Position en cm | r rayon du cercle inscrit en mm | R rayon de courbure des segments curvilignes |
|---|---|---|
| 0 | 0 | 0 |
| 10 | 0,22 | 0,29 |
| 50 | 1,12 | 1,46 |
| 100 | 2,23 | 2,93 |
| 150 | 3,35 | 4,39 |
| 200 | 4,47 | 5,85 |
| 250 | 5,59 | 7,31 |
| 300 | 6,70 | 8,78 |
| 350 | 7,82 | 10,24 |
| 400 | 8,94 | 11,70 |

Bien entendu les longueurs des cannes varient selon les usages auxquels elles sont destinées. De même l'épaisseur de la section de la fibre de carbone qui constitue les brins va varier en fonction de la résistance que la canne devra présenter.

De façon générale, comme indiqué plus haut, à poids égal, c'est-à-dire à épaisseur de fibre de carbone égale, la résistance de la canne et sa puissance seront considérablement augmentées, ainsi que la précision du lancer qui résulte de la section non circulaire de la canne qui procure une bien meilleure tenue en main, rigidité, et pénétration dans l'air. On observe que les anneaux de guidage du fil seront disposés au sommet référencé a du profil.

## Revendications

1. Canne à pêche constituée de plusieurs brins qui s'ajustent en s'emmanchant les uns au bout des autres et qui sont formés d'un profil creux, **caractérisée en ce que** ledit profil présente une section sensiblement hexagonale recti/curviligne composée de deux parties (fab ; cde) de segment anguleux à section rectiligne en V ouvert se faisant face réunies par deux parties (A ; A') de segment curviligne.

2. Canne à pêche selon la revendication 1, **caractérisée en ce que** lesdites parties de segment curviligne sont sensiblement circulaires et ont un rayon de courbure supérieur au rayon du cercle inscrit (i) dans ledit profil.

3. Canne à pêche selon la revendication 1 ou la revendication 2, **caractérisée en ce que** les angles au centre (α, β, γ, δ) sous tendus par lesdits segments curvilignes et par lesdits segments anguleux sont sensiblement égaux à 90°.

4. Canne à pêche selon l'une quelconque des revendications précédentes, **caractérisée en ce que** les six sommets (a, b, c, d, e, f) de jonction du profil hexagonal recti/curviligne sont à angle arrondi.

5. Canne à pêche selon l'une quelconque des revendications précédentes, **caractérisée en ce que** le rayon de courbure des segments curvilignes est de l'ordre de une à deux fois le rayon du cercle inscrit.

6. Canne à pêche selon l'une quelconque des revendications précédentes, **caractérisée en ce que** le rayon de courbure des segments curvilignes est de l'ordre de une fois et demie le rayon du cercle inscrit.

7. Canne à pêche selon la revendication 6, **caractérisée en ce que** le rayon de courbure des segments curvilignes est de l'ordre de 1,3 fois le rayon du cercle inscrit.

8. Canne à pêche selon l'une quelconque des revendications précédentes, **caractérisée en ce que** lesdits segments anguleux présentent un côté (B, B') légèrement plus grand que l'autre (C, C'), par exemple de l'ordre du tiers.

9. Canne à pêche selon l'une quelconque des revendications précédentes, **caractérisée en ce que** lesdits segments anguleux sont disposés symétriquement par rapport au plan médian de la canne passant par les milieux des secteurs curvilignes.

10. Canne à pêche selon l'une quelconque des revendications précédentes, **caractérisée en ce que** les profils sont réalisés en fibre de carbone.
